# EUROPEAN PATENT APPLICATION

(11) **EP 1 039 164 A2**
(43) Date of publication of application: **27.09.2000**
(21) Application number: 00105450.1
(22) Date of filing: 15.03.2000
(51) Int. Cl.: F16D 48/06

(54) **Method of controlling electromagnetic clutch and compressor system**

(30) Priority: 23.03.1999 JP 7815899
(71) Applicant: Kabushiki Kaisha Toyoda Jidoshokki Seisakusho, Aichi-ken 448-8671 (JP)
(72) Inventor: Suitou, Ken, K. K. Toyoda Jidoshokki Seisakusho, Kariya-shi, Aichi-ken, 448-8671 (JP); Matsubara, Ryo, K. K. Toyoda Jidoshokki Seisakusho, Kariya-shi, Aichi-ken, 448-8671 (JP); Adaniya, Taku, K. K. Toyoda Jidoshokki Seisakusho, Kariya-shi, Aichi-ken, 448-8671 (JP); Ota, Masaki, K. K. Toyoda Jidoshokki Seisakusho, Kariya-shi, Aichi-ken, 448-8671 (JP)
(74) Representative: Hoeger, Stellrecht & Partner

(57) **Abstract**

A friction type electromagnetic clutch (17) is interposed between a vehicle engine Eg and a compressor. The clutch has a drive rotor (31) and a driven armature (34) which are coupled together by a current input, thereby making it possible to transmit power. When the compressor is started, the control computer fixes the input current value to the electromagnetic clutch to a maximum value and maintains it for a certain time period, When the compressor is in operation after the certain time period has elapsed, the control computer changes the input current value to the electromagnetic clutch depending on the load on the compressor and thus adjusts the coupling force between the drive rotor and the driven armature.

## Description

### BACKGROUND OF THE INVENTION

### 1. Field of the Invention

The present invention relates to a method of controlling an electromagnetic clutch arranged in a power transmission path between, for example, a compressor of an air conditioning system of a vehicle and a vehicle engine for driving the compressor. The present invention also relates to a compressor system having an electromagnetic clutch.

### 2. Description of the Related Art

A method of controlling of electromagnetic clutch of this type is disclosed in Japanese Unexamined Patent Publication No. 7-286632, for example. Specifically, a control computer detects the discharge pressure of a compressor as a load thereof. The control computer calculates a required transmission torque to be transmitted from the vehicle engine to the compressor depending on the detected discharge pressure. The control computer causes a minimum current capable of achieving the calculated transmission torque to be input to the electromagnetic clutch. In other words, when the compressor is under a lighter load, the input current value to the electromagnetic clutch is reduced thereby to prevent wasteful power consumption. Once the power saving of the electromagnetic clutch is achieved, the load on the vehicle alternator can be reduced and thus the fuel consumption of the vehicle is improved.

When starting the compressor, however, the rotatable portions thereof must be started to rotate from the stationary condition, and a torque larger than that necessary in operation is required to be transmitted. Also, while the compressor is stopped, a low pressure prevails in and throughout the refrigerant circuit. When the discharge pressure is detected at the next start of the compressor, it does not necessarily indicate the load condition of the compressor. Thus, even in the case where the detected discharge pressure shows that the compressor is under a lighter load, the load may actually be heavy.

As described above, the technique disclosed in Japanese Unexamined Patent Publication No. 7-286632 fails to take into account the control of the electromagnetic clutch when starting the compressor. Therefore, the electromagnetic clutch may operate with a sliding phenomena of its components, upon starting of the compressor, causing a delay in the actual start. The delayed start of the compressor reduces a response of the vehicle air conditioning system and deteriorates the air conditioned environment.

### SUMMARY OF THE INVENTION

The present invention has been developed in view of the problems in the conventional technique described above, and the object thereof is to provide a method of controlling an electromagnetic clutch capable of preventing wasteful power consumption when a driven machine is in operation and capable of starting the driven machine with fast response.

In order to achieve the object described above, according to the present invention, there is provided a method of controlling an electromagnetic clutch arranged in a power transmission path between a drive source and a driven machine and having a drive rotor, a driven rotor arranged near the drive rotor, and an attracting member receiving an input current to attract and couple one of the drive rotor and the driven rotor to the other to enable power transmission therebetween, comprising the steps of: maintaining the input current at a maximum value for a certain period of time, upon a start of the driven machine; and changing the input current depending on a load of the driven machine to adjust the coupling force between the drive rotor and the driven rotor after the certain period of time has elapsed.

In this configuration, the input current value to the electromagnetic clutch can be reduced when the driven machine is under a lighter load, thereby making it possible to prevent wasteful power consumption. When the driven machine is started, on the other hand, the input current value to the electromagnetic clutch is maximized for a predetermined time period, and thus the machine to be driven can be started positively with higher response.

Preferably, the electromagnetic clutch comprises a friction type clutch having a first friction member as the drive rotor, a second friction member as the driven rotor, and a solenoid coil as the attracting member. With this constitution, the friction type clutch can be easily applied to the above described electromagnetic clutch.

The present invention also provides a compressor system comprising a housing, a shaft rotatably supported by the housing, a compression mechanism rotatable with the shaft to cause a gas to be compressed in the housing, and an electromagnetic clutch including a drive rotor connectable to a drive source, a driven rotor attached to the shaft and arranged in a facing relationship with the drive rotor, and a solenoid coil receiving an input current to attract and couple one of the drive rotor and the driven rotor to the other to enable power transmission therebetween. The compressor also comprises a control device for controlling the electromagnetic clutch such that the input current to the solenoid coil is maintained at a maximum value for a certain period of time, upon a start of the compressor, and the input current is changed depending on a load of the compressor to adjust the coupling force between the drive rotor and the driven rotor after the certain period of time has elapsed.

The compressor with the electromagnetic clutch can operate in the above described manner.

Preferably, the compressor further comprises a detecting device to detect a load on the compressor. In this case, preferably, the detecting device comprises a discharge pressure sensor for detecting the discharge pressure of the compressor, and a revolution sensor for detecting the rotational speed of the drive source. Preferably, the compressor further comprises a current sensor to detect a current supplied to the solenoid coil, wherein the control device comprises calculating means for calculating a current value to be input to the solenoid coil in response to the detected load, and means for comparing a current value detected by the current sensor with a current value calculated by the calculating means to cause to the input current to be changed depending on the result of the comparison.

Preferably, the mechanism comprises a swash plate mounted to the shaft for rotation therewith, and a plurality of pistons reciprocatingly arranged in corresponding bores in the housing and operatively coupled the swash plate.

### BRIEF DESCRIPTION OF THE DRAWINGS

The present invention will become more apparent from the following description of the preferred embodiments, with reference to the accompanying drawings, in which:
Fig. 1 is a longitudinal sectional view of a compressor with an electromagnetic clutch according to the present invention;
Fig. 2 is a block diagram showing a control configuration of the electromagnetic clutch; and
Fig. 3 is a flowchart for explaining the operation of the control computer.

### DESCRIPTION OF THE PREFERRED EMBODIMENTS

Now, the preferred embodiment of the present invention will be described, by way of an example of a method of controlling an electromagnetic clutch interposed between a vehicle engine as a drive source and a compressor as a driven machine, the compressor being included in a vehicle air conditioning system.

First, a configuration of the compressor will be explained.

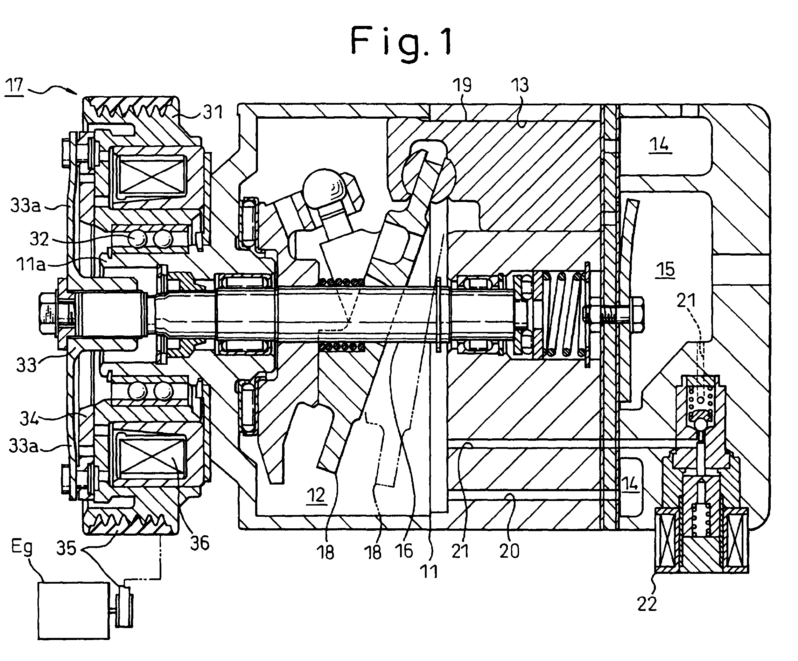

As shown in Fig. 1, a housing 11 has formed therein a crankcase 12, cylinder bores 13, an intake chamber 14, and a discharge chamber 15, and a drive shaft 16 is rotatably supported by the housing 11. The drive shaft 16 is operatively coupled to a vehicle engine Eg as an external drive source through a friction type electromagnetic clutch 17. A swash plate 18 is accommodated in the crankcase 12 and coupled to the drive shaft 16 rotatably therewith and tiltably thereto. Pistons 19 are accommodated in the cylinder bores 13 and coupled to the swash plate 18. The pistons 19 reciprocate in the cylinder bores 13 by the rotational motion of the swash plate 18 with the rotation of the drive shaft 16. As the result of the reciprocal motion of the pistons 19, the refrigerant gas is introduced from an intake chamber 14 into the cylinder bores 13 and compressed therein, and the compressed refrigerant gas is discharged into a discharge chamber 15.

A bleeding passage 20 connects the crankcase 12 to the intake chamber 14. An intake passage 21 connects the discharge chamber 15 to the crankcase 12. A capacity control valve 22 is arranged in the intake passage 21. The capacity control valve 22 operates to open/close the intake passage 21, so that the amount of the high-pressure refrigerant gas supplied from the discharge chamber 15 into the crankcase 12 is changed, and the pressure in the crankcase 12 is changed, in relation to the amount of the refrigerant gas supplied, and the amount of the refrigerant gas escaping from the crankcase 12 to the intake chamber 14 through the bleeding passage 20. Thus, the pressure difference between the pressure in the crankcase 12 on one side of the pistons 19 and the pressure in the cylinder bores 13 on the other side of pistons 19 changes so that the tilting angle of the swash plate 18 is changed thereby to adjust the discharge capacity.

The friction type electromagnetic clutch 17 will now be explained.

A rotor 31 as a friction member on the drive source side is rotatably supported by a boss 11a protruding from the outer wall surface of the housing 11 of the compressor through an angular bearing 32. The rotor 31 is operatively coupled to the vehicle engine Eg through a belt 35 wound around the outer periphery thereof. A hub 33 is fixed to the portion of the drive shaft 16 protruding outward from the housing 11. An armature 34 as a friction member on the driven machine side is supported by a spring plate portion 33a as an elastic portion of the hub 33. A solenoid coil 36 is fixedly supported by the outer wall surface of the housing 11 and arranged in the groove of the rotor 31.

When the solenoid coil 36 is energized by supplying a current thereto, the attraction force derived from the electromagnetic force of the solenoid coil 36 acts on the armature 34. Thus, the armature 34 moves and contacts the front surface of the rotor 31 against the spring plate portion 33a. Thus the rotor 31 and the armature 34 are coupled to each other (Fig. 1), so that it is possible to transmit the torque from the vehicle engine Eg (rotor 31) to the compressor (hub 33).

When the solenoid coil 36 under this condition is deenergized by stopping the supply of the current, the attraction force exerted on the armature 34 disappears. Thus, the armature 34 moves away from the rotor 31 by the urging force of the spring plate portion 33a, so that the rotor 31 and the armature 34 are decoupled, thereby making it impossible to transmit the torque from the vehicle engine Eg to the compressor.

The feature of the control of the friction type magnetic clutch 17 will be explained.

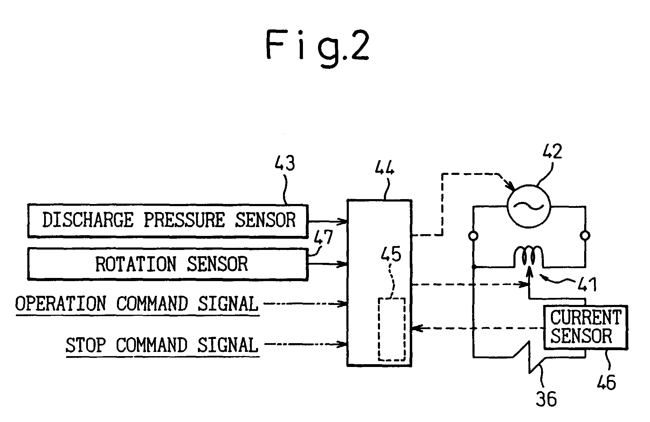

As shown in Fig. 2, the solenoid coil 36 is connected to a power supply 42 such as a vehicle battery through a transformer 41. A discharge pressure sensor 43 detects the discharge pressure of the compressor. A current sensor 46 detects the current value input to the solenoid coil 36. An engine rotational speed sensor 47 detects the rotational speed of the vehicle engine Eg.

A control computer 44 for controlling the electromagnetic clutch is provided in the compressor system comprising the compressor, the electromagnetic clutch, and the control computer, and includes a timer 45. The control computer 44 adjusts the voltage applied to the solenoid coil 36 in the range having an upper limit of the power source voltage (say, 12 V), by controlling the transformer 41 in response to the signals input from the discharge pressure sensor 43, the current sensor 46 and the engine speed sensor 47. The input current value to the electromagnetic coil 36 is changed in accordance with the change in the applied voltage, with the result that the attraction force between the rotor 31 and the armature 34, i.e. the coupling force of the friction type magnetic clutch 17 is changed.

The control operation of the friction type magnetic clutch 17 by the control computer 44 will be explained.

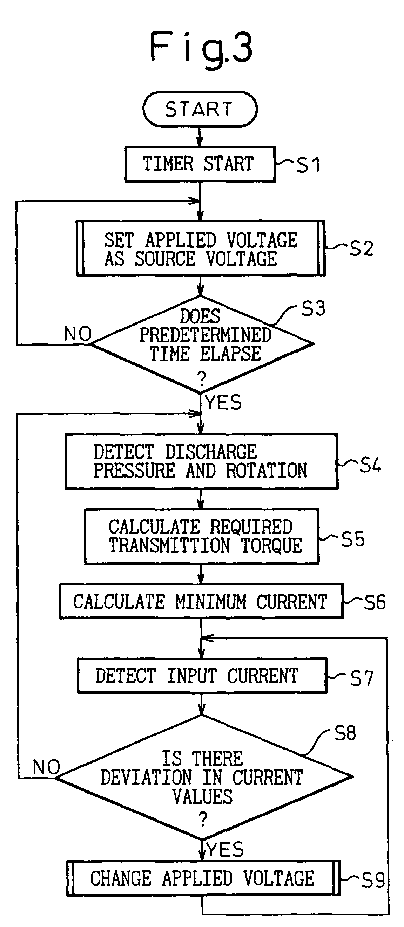

The control computer 44 is operated in accordance with the steps in the flowchart shown in Fig. 3 based on the program stored beforehand. The program is started when the operation command signal for the compressor (Fig. 2) is input. This operation command signal is input, for example, upon turning on an air conditioning switch (not shown) included in the vehicle air conditioning system on.

In step S1, the timer 45 is turned on to start counting the time. In step S2, the power supply 42 is controlled to start the application of the voltage to the solenoid coil 36, and the transformer 41 is controlled so that the voltage applied to the solenoid coil 36 is the power source voltage. Thus, the solenoid coil 36 is supplied with the maximum current based on the power source voltage. In step S3, it is determined whether the timer 45 has counted a predetermined time or not, and if the predetermined time has not yet elapsed, the process proceeds to step S2 for continuing to apply the power source voltage to the solenoid coil 36. In other words, the control computer 44 causes a supply of a maximum current to the solenoid coil 36 regardless of the discharge pressure (the load of the compressor) during the period from the start of the compressor to the lapse of the predetermined time.

In the case where it is determined in step S3 that the timer 45 has counted the predetermined time, the process proceeds to step S4. In step S4, the discharge pressure of the compressor is detected by the discharge pressure sensor 43, and the engine speed sensor 47 detects the rotational speed of the vehicle engine Eg. In step S5, the required transmission torque of the friction clutch 17 is calculated based on the detected discharge pressure and the engine rotational speed. In step S6, a minimum current value capable of securing the transmission of the calculated torque is calculated. In step S7, the input current value to the solenoid coil 36 is detected by the current sensor 46, and in step S8, the detected current value is compared with the value calculated in step S6 to determine whether there is a difference (deviation) between the detected current value and the calculated current value or not.

In the case where it is determined in step S8 that there is no difference between the detected current value and the calculated current value, the transformer 41 is not adjusted and the voltage applied to the solenoid coil 36 is maintained, followed by proceeding to step S4. In the case where it is determined in step S8 that there is a difference between the detected current value and the calculated current value, the process proceeds to step S9 in which the transformer 41 is adjusted to change the voltage applied to the solenoid coil 36. The process proceeds from step S9 to step S7. The change of the voltage applied to the solenoid coil 36 in step S9 is repeated, until it is determined in step S8 that no difference has developed between the detected current value and the calculated current value.

That is, if the load of the compressor is reduced due to the decrease in the discharge capacity, for example, this reduction is reflected as the decrease in the discharge pressure in step S4. Thus, in step S9, the applied voltage is reduced thereby to reduce the input current value to the solenoid coil 36. As a result, wasteful power consumption in the electromagnetic clutch 17 is prevented, so that the load on the vehicle alternator can be reduced and the fuel consumption of the vehicle can be reduced.

Also, if the load of the compressor increases due to an increase in the discharge capacity, this increase is reflected in the increase in the discharge pressure in step S4. Thus, in step S9, the applied voltage is increased so that the input current value to the solenoid coil 36 is increased. As a result, the required torque can be transmitted accurately for the compressor to perform the predetermined work, thereby preventing the cooling capacity of the vehicle air conditioning system from being reduced.

The process of steps S4 to S9 is repeated until the compressor stop command signal (Fig. 2) is input. Once the compressor stop command signal is input, the voltage application to the solenoid coil 36 is stopped, while the timer 45 is reset thereby to finish the program. The stop command signal is input upon the turning the air conditioning switch off, for example.

The embodiments having the configuration described above have the following effects.
(1) When the compressor is started, the voltage applied to the solenoid coil 36 of the friction type magnetic clutch 17 is fixed to the source voltage, so that the current value input to the solenoid coil 36 is maintained maximum for a certain time period. Thus, the compressor can be started rapidly and accurately for an improved response and reliability of the vehicle air conditioning system is enhanced.
(2) The friction type electromagnetic clutch 17 can be easily realized as an electromagnetic clutch suitable for the present invention.

The present invention can be embodied also in the following manner without departing from the spirit of the invention.

The means for detecting the load of the compressor may be an atmospheric temperature sensor for detecting the atmospheric temperature, as well as the discharge pressure sensor 43 for detecting the discharge pressure.

An electromagnetic powder clutch can be used as an electromagnetic clutch suitable for the present invention. In the electromagnetic powder clutch, the magnetic powder is solidified by the energization of the solenoid coil so that the rotor on the drive source side and the rotor on the driven side can be coupled to each other for torque transmission, and by changing the input current value to the solenoid coil, the force of coupling the two rotors members to each other can be adjusted.

The invention can be embodied as a method of controlling the electromagnetic clutch interposed between the vehicle engine Eg and a vehicle accessory machine other than the compressor. The vehicle accessory machine includes, for example, a mechanical supercharger.

With the configuration according to the present invention, wasteful power consumption is prevented while the driven machine is in operation, making it possible to start the driven machine with high response. By using the friction type magnetic clutch, the electromagnetic clutch can be realized easily.

## Claims

1. A method of controlling an electromagnetic clutch arranged in a power transmission path between a drive source and a driven machine and having a drive rotor, a driven rotor arranged near said drive rotor, and an attracting member receiving an input current to attract and couple one of said drive rotor and said driven rotor to the other to enable power transmission therebetween, said method comprising the steps of:
maintaining the input current at a maximum value for a certain period of time, upon a start of said driven machine; and
changing the input current depending on a load of said driven machine to adjust the coupling force between said drive rotor and said driven rotor after said certain period of time has elapsed.

2. A method according to claim 1, wherein said electromagnetic clutch comprises a friction type clutch having a first friction member as said drive rotor, a second friction member as said driven rotor, and a solenoid coil as said attracting member.

3. A compressor system comprising:
a housing;
a shaft rotatably supported by said housing;
a compression mechanism rotatable with said shaft to cause a gas to be compressed in said housing;
an electromagnetic clutch including a drive rotor connectable to a drive source, a driven rotor attached to said shaft and arranged in a facing relationship with said drive rotor, and a solenoid coil receiving an input current to attract and couple one of said drive rotor and said driven rotor to the other to enable power transmission therebetween; and
a control device for controlling said electromagnetic clutch such that the input current to the solenoid coil is maintained at a maximum value for a certain period of time, upon a start of said compressor, and the input current is changed depending on a load of said compressor to adjust the coupling force between said drive rotor and said driven rotor after said certain period of time has elapsed.

4. A compressor system according to claim 3, further comprising a detecting device to detect a load of said compressor.

5. A compressor system according to claim 4, wherein said detecting device comprises a discharge pressure sensor for detecting the discharge pressure of said compressor, and a rotational speed sensor for detecting the rotational speed of said drive source.

6. A compressor system according to claim 5, further comprising a current sensor to detect a current supplied to said solenoid coil, wherein said control device comprises calculating means for calculating a current value to be input to said solenoid coil in response to the detected load, and means for comparing a current value detected by said current sensor with a current value calculated by said calculating means to cause to said input current to be changed depending on the result of the comparison.

7. A compressor system according to claim 3, wherein said compression mechanism comprises a swash plate mounted to said shaft for rotation therewith, and a plurality of pistons reciprocatingly arranged in corresponding bores in said housing and operatively coupled said swash plate.
